# EUROPEAN PATENT APPLICATION

(11) **EP 4 458 939 A1**
(43) Date of publication of application: **06.11.2024**
(21) Application number: 22915670.8
(22) Date of filing: 07.12.2022
(51) Int. Cl.: C12G 3/06

(54) **BEVERAGE HAVING REDUCED ALCOHOL STIMULATION AND AFTERTASTE**

(30) Priority: 27.12.2021 JP 2021213233
(71) Applicant: Suntory Holdings Limited, Osaka-shi, Osaka 530-8203 (JP)
(72) Inventor: KOZU, Saki, Kawasaki-shi, Kanagawa 211-0067 (JP); KIYOHARA, Kazuki, Osaka-shi, Osaka 552-0022 (JP)
(74) Representative: Vossius & Partner Patentanwälte Rechtsanwälte mbB
(86) International application number: PCT/JP2022/045064
(87) International publication number: WO 2023/127439

(57) **Abstract**

The present invention addresses the problem of reducing stimulation derived from alcohol and/or aftertaste from alcohol in alcoholic beverages. The present invention uses cinnamaldehyde and/or terpinyl acetate.

## Description

### TECHNICAL FIELD

The present invention relates to an alcoholic beverage containing cinnamaldehyde and/or terpinyl acetate and a method related thereto.

### BACKGROUND ART

Alcoholic beverages are often problematic in the feeling of stimulation and the pungency that alcohol has. Some methods for solving such a problem are known. For example, a method involving using a milk matter in combination with caramel pigment (PTL 1), a method involving using a specified saccharide (PTL 2), and a method using 2-methyl-3-franthiol and limonene (PTL 3) are known.

### CITATION LIST

### PATENT LITERATURE

PTL 1: Japanese Patent Laid-Open No. 2021-129517
PTL 2: Japanese Patent Laid-Open No. 2019-193602
PTL 3: Japanese Patent Laid-Open No. 2017-176108

### SUMMARY OF INVENTION

### TECHNICAL PROBLEM

Alcoholic beverages do not only lead to a feeling of stimulation derived from alcohol (ethanol) during and after drinking, but also result in the retronasal aroma thereof. The retronasal aroma of alcohol as used here means a unique aroma that is felt after drinking, stimulating the nose, and similar to that of alcohol antiseptic solution.

An object of the present invention is to provide a new means for reducing a feeling of stimulation derived from alcohol and/or the retronasal aroma of alcohol in an alcoholic beverage.

### SOLUTION TO PROBLEM

The present inventors have earnestly examined and consequently found that cinnamaldehyde and/or terpinyl acetate can reduce a feeling of stimulation derived from alcohol and/or the retronasal aroma of alcohol.

The present invention relates to, but not limited to, the following.
1. An alcoholic beverage, containing cinnamaldehyde at a content of 10 to 1000 ppb, wherein absorbance at a wavelength of 550 nm is less than 0.68.
2. The alcoholic beverage according to item 1, containing terpinyl acetate at a content of 7 to 900 ppb.
3. An alcoholic beverage, containing terpinyl acetate at a content of 7 to 900 ppb.
4. The alcoholic beverage according to item 3, containing cinnamaldehyde at a content of 10 to 1000 ppb.
5. The alcoholic beverage according to item 3 or 4, wherein absorbance at a wavelength of 550 nm is less than 0.68.
6. The beverage according to any one of items 1 to 5, containing fruit juice at a content of less than 5w/w% in terms of percent fruit juice content.
7. The beverage according to any one of items 1 to 6, containing alcohol at a content of 1 to 40v/v%.
8. A method for reducing a feeling of stimulation derived from alcohol and/or a retronasal aroma of alcohol in an alcoholic beverage, including:
   mixing raw materials so that a content of cinnamaldehyde in the alcoholic beverage is 10 to 1000 ppb.
9. The method according to item 8, wherein absorbance at 550 nm of the alcoholic beverage is less than 0.68.
10. A method for reducing a feeling of stimulation derived from alcohol and/or a retronasal aroma of alcohol in an alcoholic beverage, including:
   mixing raw materials so that a content of terpinyl acetate in the alcoholic beverage is 7 to 900 ppb.
11. The method according to item 10, wherein absorbance at 550 nm of the alcoholic beverage is less than 0.68.

### ADVANTAGEOUS EFFECTS OF INVENTION

According to the present invention, a feeling of stimulation derived from alcohol and/or the retronasal aroma of alcohol can be reduced in an alcoholic beverage.

In an embodiment, the present invention can reduce the feeling of stimulation and/or the retronasal aroma without excessively imparting a spice-like flavor that cinnamaldehyde and/or terpinyl acetate has to an alcoholic beverage.

### DESCRIPTION OF EMBODIMENTS

Hereinafter, a beverage of the present invention and a method related thereto will be described.

The "ppb" as used herein means ppb by weight/volume (w/v), and this is synonymous with "µg/L" unless otherwise specified.

### (Alcohol)

The beverage of the present invention is an alcoholic beverage, namely a beverage containing alcohol. The term "alcohol" described herein means ethanol unless otherwise specified.

The alcohol content of the beverage of the present invention is, but not limited to, preferably 1 to 40 v/v%, more preferably 3 to 40 v/v%, and more preferably 5 to 40 v/v%. The upper limit value of the alcohol content may be, but not limited to, 38v/v% or less, 35v/v% or less, 30v/v% or less, or 20v/v% or less.

The alcohol content of the beverage herein can be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

Alcohol may be incorporated into the beverage of the present invention by any means. The beverage of the present invention typically contains alcohol raw material, and thereby contains alcohol. Examples of the alcohol raw material include, but not particularly limited to, spirits (rum, vodka, gin, tequila, or the like), liqueurs, whiskey, brandy, and shochu. Furthermore, the alcohol raw material may be brewage such as beer. These alcohol raw materials can be used alone or in combination.

The type of the alcoholic beverage of the present invention is, but not particularly limited to, preferably a highball, chuhai (shochu mixed with soda), a cocktail, a sour, or the like. If the terms "highball" and "chuhai" are used with reference to the beverage of the present invention, the terms mean beverages containing water, distilled liquor, and carbon dioxide. A highball and a chuhai may further contain fruit juice. If the term "sour" is used with reference to the beverage of the present invention, the term means a beverage containing a spirit, acidulous fruit juice or flavoring, for example, citrus fruit juice or flavoring, and carbon dioxide. If the term "cocktail" is used with reference to the beverage of the present invention, the term means an alcoholic beverage produced by mixing fruit juice and the like into base liquor. In an embodiment, the alcoholic beverage of the present invention is an alcoholic beverage other than a beer taste beverage. The "beer taste beverage" as used herein means a beverage that is the same as a common beer, produced based on fermentation by yeast or the like, or a carbonated beverage having taste and an aroma that are similar to those of beer. The beer taste beverage includes fermented malt beverages such as beer, low-malt beers, and liqueurs.

If the beverage of the present invention has a relatively high alcohol content, the beverage may be diluted for drinking.

### (Cinnamaldehyde)

In an embodiment, the beverage of the present invention contains cinnamaldehyde at a content of 10 to 1000 ppb, preferably 15 to 700 ppb, more preferably 20 to 450 ppb, and further preferably 20 to 350 ppb. This reduces a feeling of stimulation derived from alcohol and/or the retronasal aroma of alcohol.

It is known that cinnamaldehyde can be obtained from cinnamon, which is a crude drug, and the like.

Any known method may be used for measuring the content of cinnamaldehyde in the beverage, and for example, the beverage can be subjected to gas chromatography/mass spectrometry (GC/MS) for analysis. An example of measurement conditions for GC/MS is as follows.
- Treatment before analysis: First, 1 mL of the sample solution is collected, and 5 µL of an ethanol solution containing cyclohexanol as an internal standard substance at a content of 1000 ppm is added. Such a solution is well mixed, and 100 µL of the solution is then collected in a 10-mL vial as an analysis sample.
- Analyzer: GC8890 (Agilent Technologies)
- Mass spectrometer: MSD5977B (Agilent Technologies)
- Column: HP-INNOWAX (Agilent Technologies), Inner diameter: 0.25 mm; Length: 60 m; Film thickness: 0.5 µm
- Carrier gas: He (flow speed: 1.0 mL/minute, constant flow rate)
- Method for introducing sample: FE-DHS (full evaporation dynamic head space)
- Oven temperature: 40°C (1 minute) => 4°C/minute => 230°C (3 minutes)
- Transfer line temperature: 220°C
- Ion source temperature: 230°C
- Quadrupole temperature: 150°C
- Ions used for quantification: Cinnamaldehyde: m/z = 131

### (Terpinyl acetate)

In an embodiment, the beverage of the present invention contains terpinyl acetate at a content of 7 to 900 ppb, preferably 10 to 500 ppb, more preferably 15 to 300 ppb, and further preferably 15 to 125 ppb. This reduces a feeling of stimulation derived from alcohol and/or the retronasal aroma of alcohol.

It is known that terpinyl acetate, which has an aroma like bergamot or lavender, can be obtained from *Chamaecyparis obtusa* or the like.

Any known method may be used for measuring the content of terpinyl acetate in the beverage. For example, terpinyl acetate can be subjected to gas chromatography/mass spectrometry (GC/MS) for analysis. An example of the measurement conditions for GC/MS is as follows.
- Treatment before analysis: First, 10 mL of a sample solution appropriately diluted with ultrapure water is collected in a 20 mL-vial. Then, 3 g of sodium chloride is added to the vial and completely dissolved to provide a measurement sample. The provided sample is heated at 60°C for 5 minutes, fragrance components in the headspace are extracted with an SPME fiber (65 µm PDMS/DVB, StableFlex, Sigma-Aldrich) for 20 minutes.
- Analyzer: GC7890A (Agilent Technologies)
- Mass spectrometer: MSD5975C (Agilent Technologies)
- Column: DB-WAX (Agilent Technologies) Inner diameter: 0.25 mm; Length: 60 m; film thickness: 0.5 µm
- Carrier gas: He (flow speed: 1.0 mL/minute, constant flow rate)
- Method for injecting sample: Splitless injection
- Injection port temperature: 260°C
- Oven temperature: 40°C (3 minutes) => 4°C/minute => 230°C (1 minute)
- Transfer line temperature: 220°C
- Ion source temperature: 230°C
- Quadrupole temperature: 150°C
- Ions used for quantification: m/z = 121

In an embodiment, the beverage of the present invention contains both cinnamaldehyde and terpinyl acetate. The content ranges thereof may be any of the above-mentioned ranges. For example, the beverage of the present invention contains cinnamaldehyde at a content of 10 to 1000 ppb and terpinyl acetate a content of 7 to 900 ppb, or contains cinnamaldehyde a content of 10 to 400 ppb and terpinyl acetate a content of 7 to 500 ppb. Examples of the preferable content ranges of the components are as mentioned above.

### (Absorbance)

Neither cinnamaldehyde nor terpinyl acetate strongly color beverages. That is, the present invention does not have a great influence on the original color of a beverage into which the components are blended.

For example, if the beverage is originally colorless or light-colored, the present invention does not change the color greatly. In one embodiment, the beverage of the present invention is accordingly colorless or light-colored. This property can be defined as the absorbance at wavelength of 550 nm measured, for example, with an ultraviolet-visible spectrophotometer (UV-1600 (SHIMADZU CORPORATION) or the like). The absorbance at a wavelength of 550 nm of the beverage of the present invention in this aspect is specifically less than 0.68. Preferable examples of the absorbance at a wavelength of 550 nm are 0.67 or less, 0.65 or less, 0.63 or less, 0.60 or less, 0.55 or less, 0.50 or less, 0.40 or less, 0.30 or less, 0.20 or less, or 0.10 or less. Although the lower limit value of the absorbance is not particularly important, for example, the absorbance may be 0 or more, 0.01 or more, 0.02 or more, 0.05 or more, 0.07 or more, or 0.10 or more.

### (Fruit juice)

The beverage of the present invention may contain fruit juice, or may not contain fruit juice.

The fruit juice may be in any form of straight juice, which is juice squeezed from fruits to be used as it is, concentrated juice, which is obtained by concentrating the squeezed juice, and the like. Transparent fruit juice or cloudy fruit juice can also be used. Whole fruit juice, obtained by crushing whole fruits including the skins and removing only particularly coarse hard solid matter such as seed therefrom, fruit puree, obtained by straining fruits, or fruit juice into which the pulp of dried fruits is crushed or that is extracted from the pulp can also be used.

Examples of the type of fruit juice include, but not limited to, citrus juices (fruit juices of oranges such as Valencia oranges and navel orange; grapefruits such as grapefruit; flavorful acid citruses such as lemon, lime, flat lemon, sour orange, *Citrus junos, Citrus sphaerocarpa, Citrus sudachi,* citron, and fingered citron; miscellaneous citruses such as *Citrus natsudaidai, Citrus hassaku, Citrus tamurana,* sweetie, and Siranuhi; buntans such as *Citrus iyo* and *Citrus tankan;* tangerine oranges such as mandarin oranges, *Citrus unshiu, Citrus reticulata* var *poonensis,* and *Citrus kinokuni;* and kumquats such as *Citrus japonica),* apple juice, grape juice, peach juice, tropical fruit juices (pineapple juice, guava juice, banana juice, mango juice, acerola juice, lychee juice, papaya juice, passion fruit juice, and the like), fruit juices of other fruits (*Prunus mume* juice, Japanese pear juice, apricot juice, *Prunus salicina* juice, berry juice, kiwi fruit juice, and the like), strawberry juice, and melon juice. These fruit juice may be used alone or in combination of two or more.

The content of the fruit juice in the beverage of the present invention is not particularly limited. As the amount of the fruit juice decreases, the effect of the present invention, namely the effect of reducing the feeling of stimulation derived from alcohol and/or the retronasal aroma of alcohol, is however further clarified. Accordingly, the amount of fruit juice in the beverage of the present invention is preferably less than 5w/w%, more preferably 4w/w% or less, more preferably 3w/w% or less, more preferably 2w/w% or less, or more preferably 1w/w% or less in terms of the percent fruit juice content. These numerical ranges include 0w/w%. The fruit juice to be reduced may be citrus fruit juice, for example, lemon juice.

In the present invention, the "percent fruit juice content" in a beverage shall be calculated according to the conversion expression mentioned below using the amount (g) of a fruit juice added to 100 g of a sample. Further, calculation of concentration factor shall be made as per the JAS guidelines, with the proviso that the sugar refractometer index for a sugar, honey, or the like added to a fruit juice is excluded. Percent fruit juice content (w/w%) = <Amount of fruit juice added (g)> × <concentration factor>/100 mL/<specific gravity of beverage> × 100

### (Carbon dioxide)

The beverage of the present invention may contain carbon dioxide. Carbon dioxide can be incorporated into the beverage by a method commonly known to those skilled in the art. Although the method is not limited to the following, for example, carbon dioxide may be dissolved in the beverage under pressure, carbon dioxide may be mixed with the beverage in the piping of a mixer such as a carbonator manufactured by GEA, the beverage may be sprayed in a tank filled with carbon dioxide to make the beverage absorb carbon dioxide, or the beverage may be mixed with carbonated water. These means are appropriately used to regulate the carbon dioxide pressure.

If the beverage of the present invention contains carbon dioxide, the carbon dioxide pressure thereof is, but not particularly limited to, preferably 0.7 to 4.5 kgf/cm² and more preferably 0.8 to 2.8 kgf/cm². In the present invention, the carbon dioxide pressure can be measured with the gas volume measuring apparatus GVA-500A, manufactured by Kyoto Electronics Manufacturing Co., Ltd. For example, the sample temperature is adjusted to 20°C, gas in the air in the container in the gas volume measuring apparatus is removed (snift), followed by the shaking, and the carbon dioxide pressure is then measured. The carbon dioxide pressure as used herein means carbon dioxide pressure at 20°C unless otherwise specified.

### (pH)

In one embodiment, the pH of the alcoholic beverage according to the present invention is 2.3 to 4.5, 2.8 to 4.3, or 3.3 to 4.1. For the adjustment of the pH of the beverage, the adjustment method is not particularly limited, and the pH can be adjusted with a substance such as citric acid or trisodium citrate that is commonly used for adjusting the pHs of beverages. The contents of other components (for example, fruit juice and the like) can be regulated to adjust the pH.

### (Other components)

As long as the effect of the present invention is not prevented, various additives may be blended into the beverage of the present invention in the same way as into common beverages. Examples of the various additives include an acidulant, flavorings, vitamins, dyes, an antioxidant, an emulsifier, a preservative, seasonings, extract, a pH adjustor, a thickener, and a quality stabilizer.

In an embodiment, the contents of iso-α-acids in the beverage of the present invention are low. The total content of the iso-α-acids is preferably 0 to 0.0001 g/L, more preferably 0 to 0.00008 g/L, and more preferably 0 to 0.00005 g/L. The iso-α-acids as used here mean isohumulone, isocohumulone, and isoadhumulone. The iso-α-acids are components contained in beer taste beverages such as beers. The method for analyzing the contents thereof is not particularly limited, and, for example, HPLC can be used.

### (Packaged beverage)

The beverage of the present invention can be provided in a packaged form. The form of the container includes, but not limited to, metal containers such as cans, PET bottles, cartons, bottles, and pouches. For example, a sterilized packaged product can be produced by a method involving filling a container with the beverage of the present invention, followed by heat sterilization such as retort sterilization or a method involving sterilizing the beverage and filling a container with the sterilized beverage.

### (Related method)

In an aspect, the present invention relates to a method for reducing a feeling of stimulation derived from alcohol and/or the retronasal aroma of alcohol. The method includes mixing raw materials so that the content of cinnamaldehyde in the beverage is 10 to 1000 ppb, mixing raw materials so that the content of terpinyl acetate in the beverage is 7 to 900 ppb, or both thereof.

The absorbance at 550 nm of the alcoholic beverage in the method may be less than 0.68.

Examples of the raw materials are cinnamaldehyde, plant extract containing cinnamaldehyde, terpinyl acetate, plant extract containing terpinyl acetate, and water.

The types of the components in the beverage, the contents thereof, the pH, the carbon dioxide pressure, the preferable ranges thereof, and the methods for the adjustment thereof are as described above with respect to the beverage of the present invention, or are obvious from the descriptions. The timings are not limited, either.

### (Numerical range)

In the description for clarification, the numerical ranges as used herein includes their endpoints, namely the lower limit values and the upper limit values.

### EXAMPLES

Hereinafter, the present invention will be described in more detail while showing specific experimental examples, but the present invention is not limited to the following experimental examples.

### (Experiment 1) Effect of cinnamaldehyde

A neutral spirit was mixed with water to prepare multiple aqueous alcohol solutions containing alcohol at a content of 7v/v%, 15v/v%, 30v/v%, and 40v/v%. Cinnamaldehyde was added thereto in various amounts to prepare sample beverages. All the beverages had absorbances of 0.01 to 0.10 at a wavelength of 550 nm.

Four special panelist then sensorily evaluated the sample beverages in accordance with the following criteria, and the averages of the scores were calculated. The panelists established common understanding of the relationship between the scores and the tastes beforehand using standards corresponding to the scores to reduce the difference in evaluation between the individuals.

### (Retronasal aroma of alcohol (EtOH))

Six points: The retronasal aroma derived from alcohol is not felt at all.
Five points: The retronasal aroma derived from alcohol is scarcely felt.
Four points: The retronasal aroma derived from alcohol is weak.
Three points: The retronasal aroma derived from alcohol is slightly felt.
Two points: The retronasal aroma derived from alcohol is felt.
One point: The retronasal aroma derived from alcohol is strongly felt.
(Feeling of stimulation derived from alcohol (EtOH))
Six points: The feeling of stimulation derived from alcohol is not felt at all.
Five points: The feeling of stimulation derived from alcohol is scarcely felt.
Four points: The feeling of stimulation derived from alcohol is weak.
Three points: The feeling of stimulation derived from alcohol is slightly felt. Two points: The feeling of stimulation derived from alcohol is felt.
One point: The feeling of stimulation derived from alcohol is strongly felt.
(Spice-like flavor derived from cinnamaldehyde)
Six points: The spice-like flavor is not felt at all.
Five points: The flavor of the spice is scarcely felt.
Four points: The flavor of the spice is not very strongly felt.
Three points: The flavor of the spice is narrowly felt.
Two points: The flavor of the spice is slightly felt.
One point: The flavor of the spice is strongly felt.

These evaluation criteria and evaluation methods were also used in other experiments. The compositional profiles and the results of the beverages are as shown in the following table.

**[Table 1]**

| | | Comparative Example | | Example | | | | | | | | | |
|---|---|---|---|---|---|---|---|---|---|---|---|---|---|
| Cinnamaldehyde concentration (ppb) | | 0 | 5 | 10 | 50 | 100 | 150 | 200 | 250 | 300 | 350 | 400 | 450 |
| 7% | EtOH retronasal aroma | 2.0 | 2.0 | 4.0 | 5.0 | 5.5 | 5.5 | 6.0 | 6.0 | 5.5 | 5.5 | 5.5 | 5.5 |
| | Feeling of stimulation derived from EtOH | 3.0 | 3.0 | 5.0 | 5.5 | 5.0 | 6.0 | 6.0 | 6.0 | 6.0 | 6.0 | 6.0 | 5.5 |
| | Spice-like flavor | 6.0 | 6.0 | 6.0 | 6.0 | 5.5 | 5.0 | 5.0 | 4.5 | 4.0 | 4.0 | 3.0 | 2.0 |
| 15% | EtOH retronasal aroma | 2.0 | 3.0 | 4.0 | 4.5 | 5.5 | 5.5 | 5.0 | 5.0 | 5.5 | 6.0 | 6.0 | 6.0 |
| | Feeling of stimulation derived from EtOH | 3.0 | 3.0 | 4.0 | 4.0 | 5.0 | 5.5 | 5.5 | 5.5 | 5.0 | 5.5 | 6.0 | 6.0 |
| | Spice-like flavor | 6.0 | 6.0 | 6.0 | 6.0 | 6.0 | 5.5 | 5.5 | 5.0 | 4.5 | 4.0 | 3.0 | 2.0 |
| 30% | EtOH retronasal aroma | 1.0 | 2.0 | 4.0 | 4.0 | 4.5 | 5.0 | 5.5 | 6.0 | 5.5 | 5.5 | 5.5 | 5.0 |
| | Feeling of stimulation derived from EtOH | 1.0 | 2.0 | 4.5 | 4.5 | 5.0 | 5.5 | 5.5 | 5.5 | 5.5 | 5.5 | 5.0 | 5.0 |
| | Spice-like flavor | 6.0 | 6.0 | 6.0 | 6.0 | 6.0 | 6.0 | 5.5 | 5.0 | 4.5 | 4.0 | 3.5 | 3.0 |
| 40% | EtOH retronasal aroma | 1.0 | 2.0 | 3.0 | 3.5 | 4.0 | 4.5 | 4.5 | 4.5 | 4.0 | 4.5 | 5.0 | 5.0 |
| | Feeling of stimulation derived from EtOH | 1.0 | 1.0 | 4.0 | 4.5 | 5.0 | 4.5 | 4.5 | 3.5 | 3.0 | 3.0 | 3.0 | 3.0 |
| | Spice-like flavor | 6.0 | 6.0 | 6.0 | 6.0 | 6.0 | 5.5 | 4.5 | 3.5 | 2.5 | 2.5 | 2.5 | 2.0 |

As is apparent from the above-mentioned table, cinnamaldehyde in an amount equal to or greater than a certain amount could reduce the feeling of stimulation derived from alcohol and/or the retronasal aroma of alcohol. If the content of cinnamaldehyde increased, the spice-like flavor also increased.

### (Experiment 2) Effect of terpinyl acetate

The same experiment as Experiment 1 was performed using terpinyl acetate instead of cinnamaldehyde.

Various amounts of terpinyl acetate were specifically added to aqueous alcohol solutions containing alcohol at various contents to prepare sample beverages, followed by the sensory evaluation. The following table shows the results of the test. All the beverages had absorbances at a wavelength of 550 nm in the range of 0.01 to 0.10.

**[Table 2]**

| | | Comparative Example | | Example | | | | | | | |
|---|---|---|---|---|---|---|---|---|---|---|---|
| Terpinyl acetate concentration (ppb) | | 0 | 5 | 7 | 25 | 125 | 250 | 375 | 500 | 575 | 620 |
| 7% | EtOH retronasal aroma | 2.0 | 2.0 | 4.0 | 4.5 | 6.0 | 6.0 | 5.5 | 5.5 | 5.0 | 5.5 |
| | Feeling of stimulation derived from EtOH | 2.5 | 2.5 | 5.0 | 6.0 | 5.5 | 6.0 | 6.0 | 5.5 | 5.0 | 5.0 |
| | Spice-like flavor | 6.0 | 6.0 | 6.0 | 6.0 | 4.0 | 3.5 | 3.5 | 2.5 | 2.0 | 2.0 |
| 15% | EtOH retronasal aroma | 1.5 | 1.5 | 3.0 | 3.5 | 5.5 | 5.0 | 5.0 | 5.0 | 5.0 | 5.0 |
| | Feeling of stimulation derived from EtOH | 2.0 | 2.0 | 4.0 | 4.0 | 5.5 | 5.0 | 4.5 | 4.5 | 4.5 | 5.5 |
| | Spice-like flavor | 6.0 | 6.0 | 6.0 | 6.0 | 5.0 | 4.0 | 4.0 | 4.5 | 4.0 | 2.0 |
| 30% | EtOH retronasal aroma | 1.5 | 1.5 | 2.5 | 2.5 | 4.5 | 5.5 | 5.5 | 5.5 | 5.5 | 5.0 |
| | Feeling of stimulation derived from EtOH | 1.0 | 1.0 | 2.5 | 2.5 | 4.5 | 5.5 | 5.5 | 5.0 | 5.0 | 5.5 |
| | Spice-like flavor | 6.0 | 6.0 | 6.0 | 6.0 | 5.0 | 5.0 | 4.5 | 3.5 | 2.5 | 3.0 |
| 40% | EtOH retronasal aroma | 1.0 | 1.0 | 2.5 | 2.5 | 3.5 | 5.0 | 6.0 | 6.0 | 6.0 | 6.0 |
| | Feeling of stimulation derived from EtOH | 2.0 | 2.0 | 3.0 | 3.0 | 4.0 | 5.5 | 6.0 | 5.5 | 5.0 | 5.0 |
| | Spice-like flavor | 6.0 | 6.0 | 6.0 | 6.0 | 5.5 | 4.5 | 4.0 | 3.0 | 2.0 | 2.0 |

As is apparent from the above-mentioned table, terpinyl acetate in an amount equal to or greater than a certain amount could reduce the feeling of stimulation derived from alcohol and/or the retronasal aroma of alcohol. If the content of terpinyl acetate increased, the spice-like flavor also increased.

### (Experiment 3) Examination in lemon chuhai

Sample beverages were prepared in the same way as in Experiments 1 and 2 except that various components of lemon chuhai were added. The components contained in the lemon chuhai are an acidulant and lemon flavoring in addition to water, ethanol, cinnamaldehyde, and terpinyl acetate. All the beverages contained alcohol at a content of 7v/v%, and had absorbances at a wavelength 550 nm in the range of 0.01 to 0.10.

The obtained sample beverages were sensorily evaluated in the same way as in Experiments 1 and 2. The following table shows the results of the tests.

**[Table 3]**

| | | | | | | | | | | | |
|---|---|---|---|---|---|---|---|---|---|---|---|
| Cinnamaldehyde concentration (ppb) | | 0 | 2 | 10 | 50 | 100 | 300 | 500 | 600 | 700 | 1000 |
| 7% | EtOH retronasal aroma | 2.0 | 2.0 | 6.0 | 6.0 | 60 | 5.5 | 5.0 | 5.0 | 4.5 | 4.5 |
| | Feeling of stimulation derived from EtOH | 1.0 | 3.0 | 6.0 | 6.0 | 5.5 | 5.0 | 5.0 | 4.5 | 4.0 | 4.0 |
| | Spice-like flavor | 6.0 | 6.0 | 6.0 | 5.0 | 50 | 4.0 | 3.5 | 3.0 | 20 | 2.0 |

| | | | | | | | | | | | |
|---|---|---|---|---|---|---|---|---|---|---|---|
| Terpinyl acetate concentration (ppb) | | 0 | 5 | 7 | 12.5 | 25 | 125 | 350 | 500 | 750 | 880 |
| 7% | EtOH retronasal aroma | 2.0 | 3.0 | 4.0 | 4.0 | 60 | 5.5 | 5.0 | 5.0 | 4.5 | 4.0 |
| | Feeling of stimulation derived from EtOH | 1.0 | 2.0 | 3.0 | 3.5 | 5.5 | 5.5 | 5.5 | 4.5 | 4.5 | 40 |
| | Spice-like flavor | 6.0 | 6.0 | 6.0 | 6.0 | 60 | 5.5 | 4.5 | 4.0 | 2.5 | 2.0 |

Even though components other than alcohol and water were present, the effects of cinnamaldehyde and terpinyl acetate were observed, and the same tendency as in Experiments 1 and 2 was observed.

### (Experiment 4) Use of two components

Sample beverages containing both cinnamaldehyde and terpinyl acetate (and based on a neutral spirit) were prepared by the same method as in Experiment 1. Other sample beverages containing both (and based on lemon chuhai) were also prepared by the same method as in Experiment 3. All the beverages contained alcohol at a content of 7v/v%, and had absorbances at a wavelength of 550 nm in the range of 0.01 to 0.10.

The obtained sample beverages were subjected to the same sensory evaluation test as in Experiment 1. The following table shows the results of the test.

**[Table 4]**

| | Cinnamaldehyde (ppb) | Terpinyl acetate (ppb) | EtOH retronasal aroma | Feeling of stimulation derived from EtOH | Spice-like flavor |
|---|---|---|---|---|---|
| Neutral spirit-based | 10 | 250 | 6.0 | 6.0 | 4.0 |
| | 200 | 250 | 6.0 | 6.0 | 6.0 |
| | 400 | 500 | 6.0 | 6.0 | 5.0 |
| Lemon chuhai-based | 200 | 125 | 6.0 | 5.0 | 5.0 |
| | 220 | 125 | 6.0 | 6.0 | 3.0 |

In the case where the two components coexisted, an excellent effect of reducing the retronasal aroma and the feeling of the stimulation of alcohol was obtained, and a spice-like flavor was reduced.

### (Experiment 5) Influence of fruit juice

Aqueous alcohol solutions containing cinnamaldehyde and terpinyl acetate were first prepared in the same way as in Experiments 1 and 2, and lemon fruit juice was further added in various amounts (so that the amounts of fruit juice were 1, 2, 3, 4, and 5w/w% in terms of the percent fruit juice content) to prepare sample beverages. All the sample beverages contained cinnamaldehyde at a content of 100 ppb and terpinyl acetate at a content of 250 ppb.

Furthermore, the same sample beverages as the above-mentioned sample beverages were prepared as controls except that cinnamaldehyde and terpinyl acetate were not contained.

All the obtained sample beverages were subjected to the same sensory evaluation test as in Experiment 1. The scores of the beverages each containing cinnamaldehyde and terpinyl acetate were subtracted by scores of the controls containing the fruit juice at the contents corresponding thereto, to calculate the values. The obtained values indicate the effects of cinnamaldehyde and terpinyl acetate to reduce the alcohol retronasal aroma and the feeling of the stimulation (it is indicated that as the values increase, the reduction effects increase). The following table shows the results.

**[Table 5]**

| Reduction effect | | | | | |
|---|---|---|---|---|---|
| Fruit juice % | 1 | 2 | 3 | 4 | 5 |
| EtOH retronasal aroma | 3.5 | 2.5 | 2.5 | 2.0 | 1.0 |
| Feeling of stimulation derived from EtOH | 3.5 | 3.0 | 2.0 | 20 | 0.0 |

In the case where the fruit juice content was less than 5w/w%, the reduction effect was remarkable.

## Claims

1. An alcoholic beverage, comprising cinnamaldehyde at a content of 10 to 1000 ppb, wherein absorbance at a wavelength of 550 nm is less than 0.68.

2. The alcoholic beverage according to claim 1, comprising terpinyl acetate at a content of 7 to 900 ppb.

3. An alcoholic beverage, comprising terpinyl acetate at a content of 7 to 900 ppb.

4. The alcoholic beverage according to claim 3, comprising cinnamaldehyde at a content of 10 to 1000 ppb.

5. The alcoholic beverage according to claim 3 or 4, wherein absorbance at a wavelength of 550 nm is less than 0.68.

6. The beverage according to any one of claims 1 to 5, comprising fruit juice at a content of less than 5w/w% in terms of percent fruit juice content.

7. The beverage according to any one of claims 1 to 6, comprising alcohol at a content of 1 to 40v/v%.

8. A method for reducing a feeling of stimulation derived from alcohol and/or a retronasal aroma of alcohol in an alcoholic beverage, comprising:
mixing raw materials so that a content of cinnamaldehyde in the alcoholic beverage is 10 to 1000 ppb.

9. The method according to claim 8, wherein absorbance at 550 nm of the alcoholic beverage is less than 0.68.

10. A method for reducing a feeling of stimulation derived from alcohol and/or a retronasal aroma of alcohol in an alcoholic beverage, comprising:
mixing raw materials so that a content of terpinyl acetate in the alcoholic beverage is 7 to 900 ppb.

11. The method according to claim 10, wherein absorbance at 550 nm of the alcoholic beverage is less than 0.68.
